# EUROPEAN PATENT APPLICATION

(11) **EP 4 002 087 A1**
(43) Date of publication of application: **25.05.2022**
(21) Application number: 19938690.5
(22) Date of filing: 19.07.2019
(51) Int. Cl.: G06F 3/16, G10L 15/22, H04N 21/4363, H04N 21/436, H04N 21/422, H04Q 9/00

(54) **DISPLAY DEVICE AND ARTIFICIAL INTELLIGENCE SERVER WHICH CAN CONTROL HOME APPLIANCE THROUGH USER VOICE**

(71) Applicant: LG Electronics Inc., SEOUL 07336 (KR)
(72) Inventor: LEE, Jaekyung, Seoul 06772 (KR); SON, Myeongok, Seoul 06772 (KR)
(74) Representative: Katérle, Axel
(86) International application number: PCT/KR2019/008982
(87) International publication number: WO 2021/015307

(57) **Abstract**

A display device for controlling a home appliance by using voice recognition according to an embodiment of the present invention includes: a wireless communication unit configured to wirelessly communicate with the home appliance; and a control unit configured to receive a voice command, to obtain intention of the received voice command, to determine whether the obtained intention is a custom operation request for controlling a function specialized for the home appliance, to convert the voice command into a custom operation command for performing the specialized function when the intention is the custom operation request, and to transmit the converted custom operation command to the home appliance through the wireless communication unit.

## Description

### [TECHNICAL FIELD]

The present invention relates to a display device that can control home appliance through a user voice.

### [BACKGROUND ART]

Digital TV services using wired or wireless communication networks are becoming common. Digital TV services are capable of providing various services that could not be provided by the existing analog broadcasting services.

For example, Internet Protocol Television (IPTV) and smart TV services, which are types of digital TV services, provide interactivity so that users can actively select the types of watching programs, the watching time, and the like. The IPTV and smart TV services can provide various additional services, such as Internet search, home shopping, and online games, based on such interactivity.

While watching TV, a user often operates other home appliances provided in the house according to the viewing situation of the TV.

Recently, a service that can control the operation of home appliances by using a voice recognition function of a TV while watching the TV has appeared.

That is, a user can control the operation of the home appliance by uttering the name of the home appliance and the operation of the home appliance.

However, in order to control the specialized function of the home appliance, it is inconvenient to have to utter all the voices indicating the manufacturer name of the home appliance, the name of the home appliance, and the specialized operation of the home appliance as a custom action.

### [DISCLOSURE OF INVENTION]

### [TECHNICAL PROBLEM]

The present invention aims to be able to control an operation of home appliance through a user's natural voice command.

The present invention aims to be able to control a specialized function of home appliance without complicated voice commands.

### [TECHNICAL SOLUTION]

A display device for controlling a home appliance by using voice recognition according to an embodiment of the present invention includes: a wireless communication unit configured to wirelessly communicate with the home appliance; and a control unit configured to receive a voice command, to obtain intention of the received voice command, to determine whether the obtained intention is a custom operation request for controlling a function specialized for the home appliance, to convert the voice command into a custom operation command for performing the specialized function when the intention is the custom operation request, and to transmit the converted custom operation command to the home appliance through the wireless communication unit.

An artificial intelligence server for controlling a home appliance by using voice recognition according to an embodiment of the present invention can include: a communication unit configured to receive a voice command from a display device; and a processor configured to obtain intention of the received voice command, to determine whether the obtained intention is a custom operation request for controlling a function specialized for the home appliance, to convert the voice command into a custom operation command for performing the specialized function when the intention is the custom operation request, and to transmit the converted custom operation command through the communication unit to an external server for controlling the operation of the home appliance.

### [ADVANTAGEOUS EFFECTS]

According to various embodiments of the present invention, a user can control an operation of home appliance through natural speech without uttering a company name of specific home appliance, thereby providing an improved user experience.

In addition, the user can intuitively and quickly determine whether the specialized function of the home appliance is controlled according to the voice command uttered by the user through the output of state information of the home appliance.

### [BRIEF DESCRIPTION OF DRAWINGS]

Fig. 1 is a block diagram illustrating a configuration of a display device according to an embodiment of the present invention.
Fig. 2 is a block diagram illustrating a remote control device according to an embodiment of the present invention.
Fig. 3 is a view illustrating an actual configuration of a remote control device according to an embodiment of the present invention.
Fig. 4 is a view illustrating an example of utilizing a remote control device according to an embodiment of the present invention.
Fig. 5 is a view for describing an artificial intelligence (AI) system according to an embodiment of the present invention.
Fig. 6 is a block diagram for describing the configuration of the AI server according to an embodiment of the present invention.
Fig. 7 is a ladder diagram for an operating method of an AI system according to an embodiment of the present invention.
Fig. 8a is a view for describing an example of direct actions and custom actions for functions of an air conditioner, which is one of home appliances, and Fig. 8b is a view for describing a process in which a first AI server determines an operation request type of the home appliance corresponding to a user's intention by using a database (30).
Figs. 9 and 10 are views illustrating a scenario in which a user controls a basic function of an air conditioner through a voice command.
Figs. 11 and 12 are views illustrating a scenario in which a user controls a specialized function of an air conditioner through a voice command.
Fig. 13 is a flowchart illustrating a method of operating a display device for controlling home appliance through a voice according to an embodiment of the present invention.
Figs. 14 and 15 are views for describing a scenario in which the display device controls the basic function of the air conditioner through a user's voice command.
Figs. 16 and 17 are views for describing a scenario in which the display device controls the specialized function of the air conditioner through a user's voice command.

### [BEST MODE FOR CARRYING OUT THE INVENTION]

Hereinafter, embodiments relating to the present invention will be described in detail with reference to the accompanying drawings. The suffixes "module" and "unit" for components used in the description below are assigned or mixed in consideration of easiness in writing the specification and do not have distinctive meanings or roles by themselves.

A display device according to an embodiment of the present invention, for example, as an artificial display device that adds a computer supporting function to a broadcast receiving function, can have an easy-to-use interface such as a writing input device, a touch screen, or a spatial remote control device as an Internet function is added while fulfilling the broadcast receiving function. Then, with the support of a wired or wireless Internet function, it is possible to perform an e-mail, web browsing, banking, or game function in access to Internet and computers. In order to perform such various functions, standardized general purpose OS can be used.

Accordingly, since various applications are freely added or deleted on a general purpose OS kernel, a display device described herein, for example, can perform various user-friendly functions. The display device, in more detail, can be a network TV, Hybrid Broadcast Broadband TV (HBBTV), smart TV, light-emitting diode (LED) TV, organic light-emitting diode (OLED) TV, and so on and in some cases, can be applied to a smartphone.

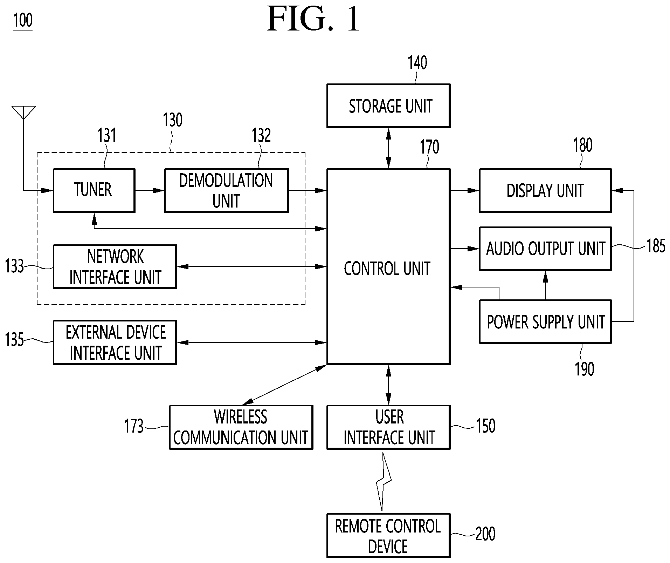

Fig. 1 is a block diagram illustrating a configuration of a display device according to an embodiment of the present invention.

Referring to Fig. 1, a display device 100 can include a broadcast reception unit 130, an external device interface unit 135, a storage unit 140, a user input interface unit 150, a control unit 170, a wireless communication unit 173, a display unit 180, an audio output unit 185, and a power supply unit 190.

The broadcast reception unit 130 can include a tuner 131, a demodulation unit 132, and a network interface unit 133.

The tuner 131 can select a specific broadcast channel according to a channel selection command. The tuner 131 can receive broadcast signals for the selected specific broadcast channel.

The demodulation unit 132 can divide the received broadcast signals into video signals, audio signals, and broadcast program related data signals and restore the divided video signals, audio signals, and data signals to an output available form.

The external device interface unit 135 can receive an application or an application list in an adjacent external device and deliver it to the control unit 170 or the storage unit 140.

The external device interface unit 135 can provide a connection path between the display device 100 and an external device. The external device interface unit 135 can receive at least one an image or audio output from an external device that is wirelessly or wiredly connected to the display device 100 and deliver it to the control unit 170. The external device interface unit 135 can include a plurality of external input terminals. The plurality of external input terminals can include an RGB terminal, at least one High Definition Multimedia Interface (HDMI) terminal, and a component terminal.

An image signal of an external device input through the external device interface unit 135 can be output through the display unit 180. A sound signal of an external device input through the external device interface unit 135 can be output through the audio output unit 185.

An external device connectable to the external device interface unit 135 can be one of a set-top box, a Blu-ray player, a DVD player, a game console, a sound bar, a smartphone, a PC, a USB Memory, and a home theater system, but this is just exemplary.

The network interface unit 133 can provide an interface for connecting the display device 100 to a wired/wireless network including the Internet network. The network interface unit 133 can transmit or receive data to or from another user or another electronic device through an accessed network or another network linked to the accessed network.

Additionally, some content data stored in the display device 100 can be transmitted to a user or an electronic device, which is selected from other users or other electronic devices pre-registered in the display device 100.

The network interface unit 133 can access a predetermined webpage through an accessed network or another network linked to the accessed network. That is, the network interface unit 133 can transmit or receive data to or from a corresponding server by accessing a predetermined webpage through the network.

Then, the network interface unit 133 can receive contents or data provided from a content provider or a network operator. That is, the network interface unit 133 can receive contents such as movies, advertisements, games, VODs, and broadcast signals, which are provided from a content provider or a network provider, through network and information relating thereto.

Additionally, the network interface unit 133 can receive firmware update information and update files provided from a network operator and transmit data to an Internet or content provider or a network operator.

The network interface unit 133 can select and receive a desired application among applications open to the air, through network.

The storage unit 140 can store signal-processed image, voice, or data signals stored by a program in order for each signal processing and control in the control unit 170.

Additionally, the storage unit 140 can perform a function for temporarily storing image, voice, or data signals output from the external device interface unit 135 or the network interface unit 133 and can store information on a predetermined image through a channel memory function.

The storage unit 140 can store an application or an application list input from the external device interface unit 135 or the network interface unit 133.

The display device 100 can play content files (for example, video files, still image files, music files, document files, application files, and so on) stored in the storage unit 140 and provide them to a user.

The user input interface unit 150 can deliver signals input by a user to the control unit 170 or deliver signals from the control unit 170 to a user. For example, the user input interface unit 150 can receive or process control signals such as power on/off, channel selection, and screen setting from the remote control device 200 or transmit control signals from the control unit 170 to the remote control device 200 according to various communication methods such as Bluetooth, Ultra Wideband (WB), ZigBee, Radio Frequency (RF), and IR.

Additionally, the user input interface unit 150 can deliver, to the control unit 170, control signals input from local keys (not shown) such as a power key, a channel key, a volume key, and a setting key.

Image signals that are image-processed in the control unit 170 can be input to the display unit 180 and displayed as an image corresponding to corresponding image signals. Additionally, image signals that are image-processed in the control unit 170 can be input to an external output device through the external device interface unit 135.

Voice signals processed in the control unit 170 can be output to the audio output unit 185. Additionally, voice signals processed in the control unit 170 can be input to an external output device through the external device interface unit 135.

Besides that, the control unit 170 can control overall operations in the display device 100.

Additionally, the control unit 170 can control the display device 100 by a user command or internal program input through the user input interface unit 150 and download a desired application or application list into the display device 100 in access to network.

The control unit 170 can output channel information selected by a user together with processed image or voice signals through the display unit 180 or the audio output unit 185.

Additionally, according to an external device image playback command received through the user input interface unit 150, the control unit 170 can output image signals or voice signals of an external device such as a camera or a camcorder, which are input through the external device interface unit 135, through the display unit 180 or the audio output unit 185.

Moreover, the control unit 170 can control the display unit 180 to display images and control broadcast images input through the tuner 131, external input images input through the external device interface unit 135, images input through the network interface unit, or images stored in the storage unit 140 to be displayed on the display unit 180. In this case, an image displayed on the display unit 180 can be a still image or video and also can be a 2D image or a 3D image.

Additionally, the control unit 170 can play content stored in the display device 100, received broadcast content, and external input content input from the outside, and the content can be in various formats such as broadcast images, external input images, audio files, still images, accessed web screens, and document files.

Moreover, the wireless communication unit 173 can perform a wired or wireless communication with an external electronic device. The wireless communication unit 173 can perform short-range communication with an external device. For this, the wireless communication unit 173 can support short-range communication by using at least one of Bluetooth^{™}, Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, and Wireless Universal Serial Bus (USB) technologies. The wireless communication unit 173 can support wireless communication between the display device 100 and a wireless communication system, between the display device 100 and another display device 100, or between networks including the display device 100 and another display device 100 (or an external server) through wireless area networks. The wireless area networks can be wireless personal area networks.

Herein, the other display device 100 can be a mobile terminal such as a wearable device (for example, a smart watch, a smart glass, and a head mounted display (HMD)) or a smartphone, which is capable of exchanging data (or interworking) with the display device 100. The wireless communication unit 173 can detect (or recognize) a communicable wearable device around the display device 100. Furthermore, if the detected wearable device is a device authenticated to communicate with the display device 100, the control unit 170 can transmit at least part of data processed in the display device 100 to the wearable device through the wireless communication unit 173. Accordingly, a user of the wearable device can use the data processed in the display device 100 through the wearable device.

The display unit 180 can convert image signals, data signals, or on-screen display (OSD) signals, which are processed in the control unit 170, or images signals or data signals, which are received in the external device interface unit 135, into R, G, and B signals to generate driving signals.

Furthermore, the display device 100 shown in Fig. 1 is just one embodiment of the present invention and thus, some of the components shown can be integrated, added, or omitted according to the specification of the actually implemented display device 100.

That is, if necessary, two or more components can be integrated into one component or one component can be divided into two or more components and configured. Additionally, a function performed by each block is to describe an embodiment of the present invention and its specific operation or device does not limit the scope of the present invention.

According to another embodiment of the present invention, unlike Fig. 1, the display device 100 can receive images through the network interface unit 133 or the external device interface unit 135 and play them without including the tuner 131 and the demodulation unit 132.

For example, the display device 100 can be divided into an image processing device such as a set-top box for receiving broadcast signals or contents according to various network services and a content playback device for playing contents input from the image processing device.

In this case, an operating method of a display device according to an embodiment of the present invention described below can be performed by one of the display device described with reference to Fig. 1, an image processing device such as the separated set-top box, and a content playback device including the display unit 180 and the audio output unit 185.

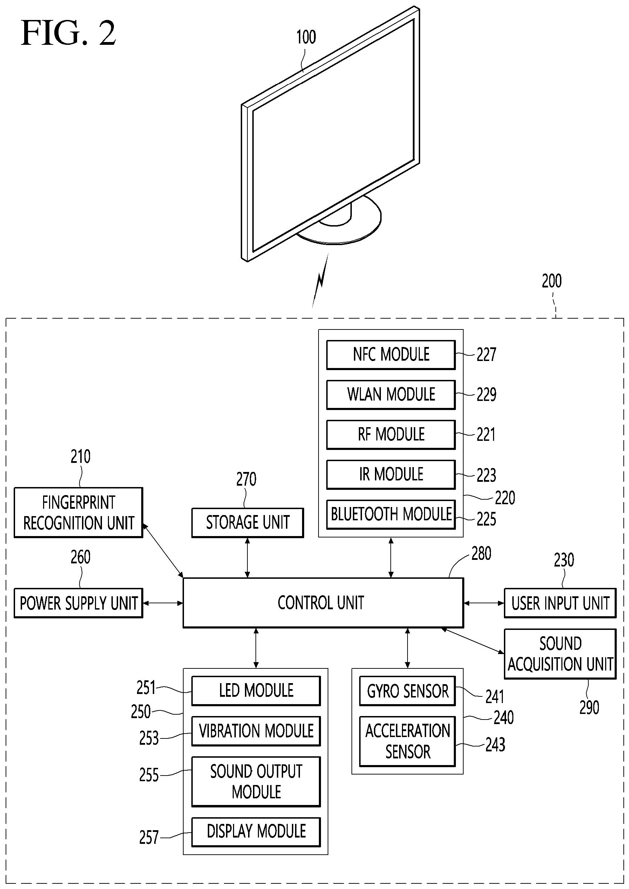

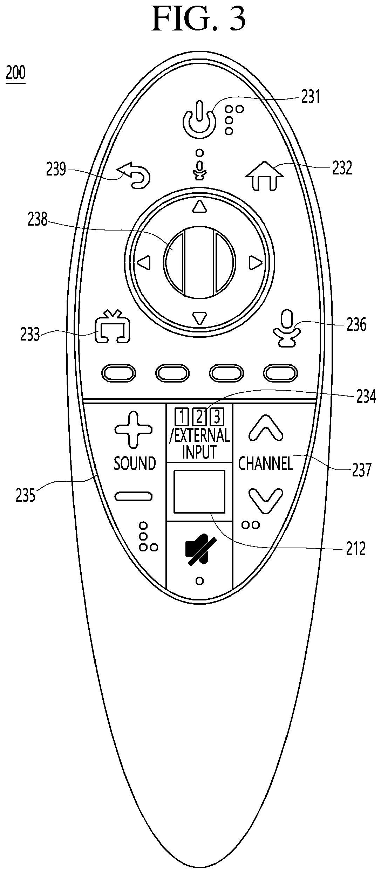

Then, referring to Figs. 2 and 3, a remote control device is described according to an embodiment of the present invention.

Fig. 2 is a block diagram illustrating a remote control device according to an embodiment of the present invention and Fig. 3 is a view illustrating an actual configuration of a remote control device according to an embodiment of the present invention.

First, referring to Fig. 2, a remote control device 200 can include a fingerprint recognition unit 210, a wireless communication unit 220, a user input unit 230, a sensor unit 240, an output unit 250, a power supply unit 260, a storage unit 270, a control unit 280, and a sound acquisition unit 290.

Referring to Fig. 2, the wireless communication unit 220 transmits/receives signals to/from an arbitrary any one of display devices according to the above-mentioned embodiments of the present invention.

The remote control device 200 can include a radio frequency (RF) module 221 for transmitting/receiving signals to/from the display device 100 according to the RF communication standards and an IR module 223 for transmitting/receiving signals to/from the display device 100 according to the IR communication standards. Additionally, the remote control device 200 can include a Bluetooth module 225 for transmitting/receiving signals to/from the display device 100 according to the Bluetooth communication standards. Additionally, the remote control device 200 can include a Near Field Communication (NFC) module 227 for transmitting/receiving signals to/from the display device 100 according to the NFC communication standards and a WLAN module 229 for transmitting/receiving signals to/from the display device 100 according to the Wireless LAN (WLAN) communication standards.

Additionally, the remote control device 200 can transmit signals containing information on a movement of the remote control device 200 to the display device 100 through the wireless communication unit 220.

Moreover, the remote control device 200 can receive signals transmitted from the display device 100 through the RF module 221 and if necessary, can transmit a command on power on/off, channel change, and volume change to the display device 100 through the IR module 223.

The user input unit 230 can be configured with a keypad button, a touch pad, or a touch screen. A user can manipulate the user input unit 230 to input a command relating to the display device 100 to the remote control device 200. If the user input unit 230 includes a hard key button, a user can input a command relating to the display device 100 to the remote control device 200 through the push operation of the hard key button. This will be described with reference to Fig. 3.

Referring to Fig. 3, the remote control device 200 can include a plurality of buttons. The plurality of buttons can include a fingerprint recognition button 212, a power button 231, a home button 232, a live button 233, an external input button 234, a voice adjustment button 235, a voice recognition button 236, a channel change button 237, a check button 238, and a back button 239.

The fingerprint recognition button 212 can be a button for recognizing a user's fingerprint. According to an embodiment of the present invention, the fingerprint recognition button 212 can perform a push operation and receive a push operation and a fingerprint recognition operation. The power button 231 can be button for turning on/off the power of the display device 100. The home button 232 can be a button for moving to the home screen of the display device 100. The live button 233 can be a button for displaying live broadcast programs. The external input button 234 can be a button for receiving an external input connected to the display device 100. The voice adjustment button 235 can be a button for adjusting the size of a volume output from the display device 100. The voice recognition button 236 can be a button for receiving user's voice and recognizing the received voice. The channel change button 237 can be a button for receiving broadcast signals of a specific broadcast channel. The check button 238 can be a button for selecting a specific function and the back button 239 can be a button for returning to a previous screen.

Again, Fig. 2 is described.

If the user input unit 230 includes a touch screen, a user can touch a soft key of the touch screen to input a command relating to the display device 100 to the remote control device 200. Additionally, the user input unit 230 can include various kinds of input means manipulated by a user, for example, a scroll key and a jog key, and this embodiment does not limit the scope of the present invention.

The sensor unit 240 can include a gyro sensor 241 or an acceleration sensor 243 and the gyro sensor 241 can sense information on a movement of the remote control device 200.

For example, the gyro sensor 241 can sense information on an operation of the remote control device 200 on the basis of x, y, and z axes and the acceleration sensor 243 can sense information on a movement speed of the remote control device 200. Moreover, the remote control device 200 can further include a distance measurement sensor and sense a distance with respect to the display unit 180 of the display device 100.

The output unit 250 can output image or voice signals in response to manipulation of the user input unit 230 or image or voice signals corresponding to signals transmitted from the display device 100. A user can recognize whether the user input unit 230 is manipulated or the display device 100 is controlled through the output unit 250.

For example, the output unit 250 can include an LED module 251 for flashing, a vibration module 253 for generating vibration, a sound output module 255 for outputting sound, or a display module 257 for outputting an image, if the user input unit 230 is manipulated or signals are transmitted/received to/from the display device 100 through the wireless communication unit 220.

Additionally, the power supply unit 260 supplies power to the remote control device 200 and if the remote control device 200 does not move for a predetermined time, stops the power supply, so that power waste can be reduced. The power supply unit 260 can resume the power supply if a predetermined key provided at the remote control device 200 is manipulated.

The storage unit 270 can store various kinds of programs and application data necessary for control or operation of the remote control device 200. If the remote control device 200 transmits/receives signals wirelessly through the display device 100 and the RF module 221, the remote control device 200 and the display device 100 transmits/receives signals through a predetermined frequency band.

The control unit 280 of the remote control device 200 can store, in the storage unit 270, information on a frequency band for transmitting/receiving signals to/from the display device 100 paired with the remote control device 200 and refer to it.

The control unit 280 controls general matters relating to control of the remote control device 200. The control unit 280 can transmit a signal corresponding to a predetermined key manipulation of the user input unit 230 or a signal corresponding to movement of the remote control device 200 sensed by the sensor unit 240 to the display device 100 through the wireless communication unit 220.

Additionally, the sound acquisition unit 290 of the remote control device 200 can obtain voice.

The sound acquisition unit 290 can include at least one microphone and obtain voice through the microphone 291.

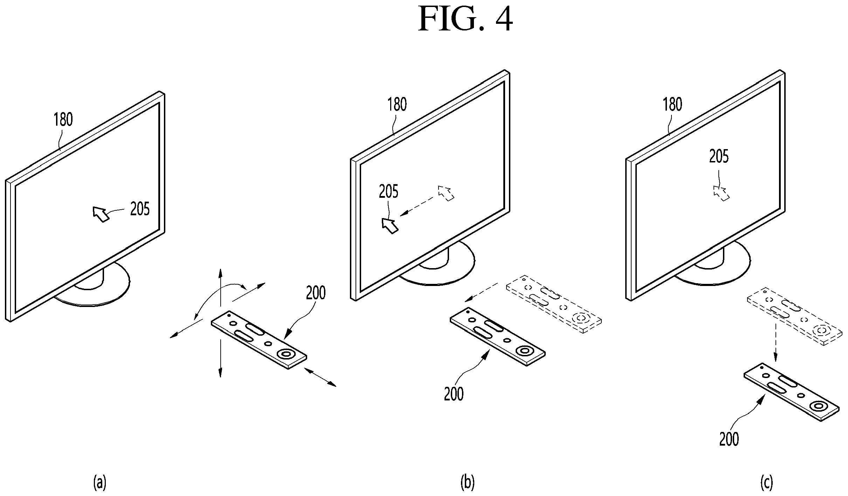

Next, Fig. 4 is described.

Fig. 4 is a view of utilizing a remote control device according to an embodiment of the present invention.

Fig. 4(a) illustrates that a pointer 205 corresponding to the remote control device 200 is displayed on the display unit 180.

A user can move or rotate the remote control device 200 vertically or horizontally. The pointer 205 displayed on the display unit 180 of the display device 100 corresponds to a movement of the remote control device 200. Since the corresponding pointer 205 is moved and displayed according to a movement on a 3D space as show in the drawing, the remote control device 200 can be referred to as a spatial remote control device.

Fig. 4(b) illustrates that if a user moves the remote control device 200, the pointer 205 displayed on the display unit 180 of the display device 100 is moved to the left according to the movement of the remote control device 200.

Information on a movement of the remote control device 200 detected through a sensor of the remote control device 200 is transmitted to the display device 100. The display device 100 can calculate the coordinates of the pointer 205 from the information on the movement of the remote control device 200. The display device 100 can display the pointer 205 to match the calculated coordinates.

Fig. 4(c) illustrates that while a specific button in the remote control device 200 is pressed, a user moves the remote control device 200 away from the display unit 180. Thus, a selection area in the display unit 180 corresponding to the pointer 205 can be zoomed in and displayed larger.

On the other hand, if a user moves the remote control device 200 close to the display unit 180, a selection area in the display unit 180 corresponding to the pointer 205 can be zoomed out and displayed in a reduced size.

On the other hand, if the remote control device 200 is moved away from the display unit 180, a selection area can be zoomed out and if the remote control device 200 is moved closer to the display unit 180, a selection area can be zoomed in.

Additionally, if a specific button in the remote control device 200 is pressed, recognition of a vertical or horizontal movement can be excluded. That is, if the remote control device 200 is moved away from or closer to the display unit 180, the up, down, left, or right movement cannot be recognized and only the back and forth movement can be recognized. While a specific button in the remote control device 200 is not pressed, only the pointer 205 is moved according to the up, down, left or right movement of the remote control device 200.

Moreover, the moving speed or moving direction of the pointer 205 can correspond to the moving speed or moving direction of the remote control device 200.

Furthermore, a pointer in this specification means an object displayed on the display unit 180 in response to an operation of the remote control device 200. Accordingly, besides an arrow form displayed as the pointer 205 in the drawing, various forms of objects are possible. For example, the above concept includes a point, a cursor, a prompt, and a thick outline. Then, the pointer 205 can be displayed in correspondence to one point of a horizontal axis and a vertical axis on the display unit 180 and also can be displayed in correspondence to a plurality of points such as a line and a surface.

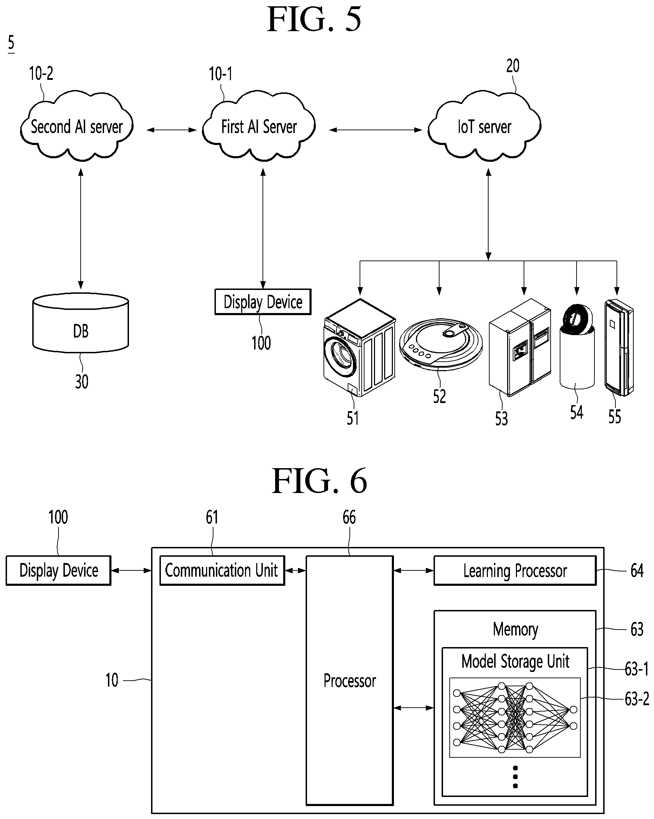

Fig. 5 is a view for describing an artificial intelligence (AI) system according to an embodiment of the present invention.

The AI system 5 can include a display device 100, a first AI server 10-1, a second AI server 10-2, an IoT server 20, a database 30, and a plurality of home appliances 51 to 55.

The display device 100 can wirelessly communicate with the first and second AI servers 10-1 and 10-2.

The display device 100 can receive a voice command and transmit the received voice command to the first AI server 10-1.

The first AI server 10-1 can analyze the intention of the received voice command.

The first AI server 10-1 can determine the operation request type of the home appliance according to the analyzed intention.

The first AI server 10-1 can determine whether the operation request type of the home appliance is a direct operation request.

When the operation request type of the home appliance is a direct request, the first AI server 10-1 can transmit, to the IoT server 20, a control command for performing the operation of the home appliance corresponding to the intention of the voice command.

The first AI server 10-1 can receive, from the IoT server 20, first state information of the home appliance including a result of performing the operation according to the control command.

The first AI server 10-1 can transmit, to the display device 100, the first state information of the home appliance received from the IoT server 20.

The display device 100 can output the first state information of the home appliance received from the first AI server 10-1.

When the operation request type of the home appliance is not a direct operation request, the first AI server 10-1 can determine the operation request type of the home appliance as a custom operation request and transmit, to the second AI server 10-2, text data corresponding to the voice command.

The second AI server 10-2 can obtain a custom operation corresponding to the intention of the voice command by using the text data.

The second AI server 10-2 can convert the text data corresponding to the voice command into a custom operation command indicating the custom operation.

The second AI server 10-2 can transmit the converted custom operation command to the IoT server 20.

The first AI server 10-1 can receive, from the IoT server 20, second state information including a result of performing the operation of the home appliance according to the custom operation command.

The display device 100 can receive the second state information of the home appliance from the first AI server 10-1 (S729), and can output the received second state information.

The IoT server 20 can collect information about the home appliance from each of the wirelessly connected home appliances 51 to 55.

The information about the home appliance can include one or more of a manufacturer name of the home appliance, a model name of the home appliance, a name of the home appliance, and state information indicating an operating state of the home appliance.

The database 30 can store information of each home appliance collected by the IoT server 20.

In particular, the database 30 can store specialized functions of the home appliance and commands corresponding to the functions.

The database 30 can be included in a memory 63 of the AI server 10 to be described below.

The home appliances can be one of a washing machine 51, a robot cleaner 52, a refrigerator 53, an air purifier 54, and an air conditioner 55.

Fig. 6 is a block diagram for describing the configuration of the AI server according to an embodiment of the present invention.

The AI server 10 illustrated in Fig. 6 can be the first AI server 10-1 or the second AI server 10-2 illustrated in Fig. 5.

The first AI server 10-1 and the second AI server 10-2 can be configured as one server.

Referring to Fig. 6, the AI server 10 can refer to a device that learns an artificial neural network by using a machine learning algorithm or uses a learned artificial neural network. The AI server 10 can be configured with a plurality of servers to perform distributed processing, and can be defined as a 5G network. In this case, the AI server 10 can be included as a part of the display device 100 to perform at least a part of AI processing together.

The AI server 10 can include a communication unit 61, a memory 63, a learning processor 64, and a processor 66.

The communication unit 61 can transmit or receive data to or from an external device such as the display device 100.

The memory 63 can include a model storage unit 63-1. The model storage unit 63-1 can store a model (or an artificial neural network 63-2) that is being learned or is learned through the learning processor 64.

The learning processor 64 can learn the artificial neural network 63-2 by using training data. The learning model can be used while being mounted on the AI server 10 of the artificial neural network, or can be used while being mounted on the external device such as the display device 100.

The learning model can be implemented as hardware, software, or a combination of hardware and software. When all or part of the learning model is implemented as software, one or more instructions constituting the learning model can be stored in the memory 63.

The processor 66 can infer a result value for new input data by using the learning model and generate a response or a control command based on the inferred result value.

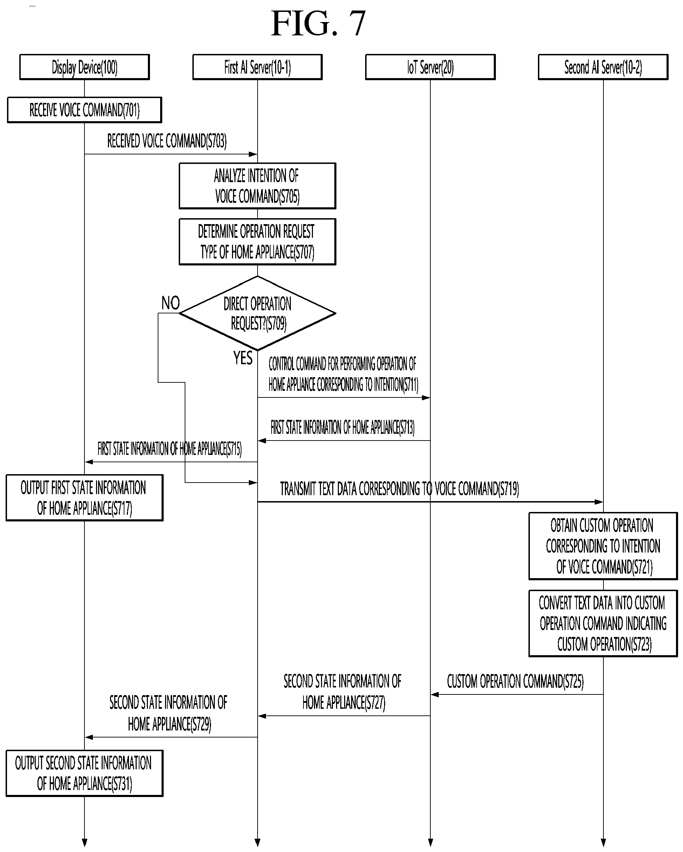

Then, referring to Fig. 7, an operating method of a system according to an embodiment of the present invention is described.

Fig. 7 is a ladder diagram for an operating method of an AI system according to an embodiment of the present invention.

Referring to Fig. 7, the control unit 170 of the display device 100 receives a user's voice command (S701).

In an embodiment, the control unit 170 can receive a voice command uttered by a user through a microphone provided in the user input interface unit 150.

In another example, the control unit 170 can receive, from the remote control device 200, a voice command input into the microphone of the remote control device 200.

The control unit 170 of the display device 100 transmits, to the communication unit 61 of the first AI server 10-1, the voice command received through the network interface unit 133 (S703).

The control unit 170 can transmit, to the first AI server 10-1, voice data corresponding to the received voice command.

The processor 66 of the first AI server 10-1 analyzes the intention of the received voice command (S705).

The processor 66 can convert voice data corresponding to the voice command into text data by using a speech to text (STT) engine.

The processor 66 can analyze the user's intention from the converted text data by using a natural language processing engine.

The processor 66 of the first AI server 10-1 determines the operation request type of the home appliance according to the analyzed intention (S707).

The operation request type of the home appliance can include a direct operation request and a custom operation request.

The direct operation request can be a request for controlling the basic operation of the home appliance.

For example, when the home appliance is the air conditioner 55, the basic operation of the air conditioner 55 can be an operation of a general air conditioner, such as power on/off, current temperature output, and temperature setting.

The custom operation request can be a request for controlling a specialized operation of the home appliance.

For example, when the home appliance is the air conditioner 55, the specialized operation of the air conditioner 55 can be a unique operation of a specific air conditioner, such as setting a dehumidification mode of the air conditioner 55 and setting an air cleaning mode of the air conditioner 55.

The processor 66 can determine whether the user's intention is a direct operation request or a custom operation request by using data stored in the memory 63.

The database 30 can store an intention corresponding to a direct operation request and direct actions corresponding to the intention.

When it is determined that the analyzed intention is an intention corresponding to the direct operation request, the processor 66 can determine the operation type of the home appliance as the direct operation request.

When it is determined that the analyzed intention is not an intention corresponding to the direct operation request, the processor 66 can determine the operation type of the home appliance as the custom operation request.

The processor 66 of the first AI server 10-1 determines whether the operation request type of the home appliance is a direct operation request (S709).

When the operation request type of the home appliance is the direct request, the processor 66 of the first AI server 10-1 transmits a control command for performing the operation of the home appliance corresponding to the intention of the voice command to the IoT server 20 through the communication unit 61 (S711).

The IoT server 20 can transmit, to the corresponding home appliance, the control command received from the first AI server 10-1.

The IoT server 20 can receive, from the corresponding home appliance, state information of the home appliance including a result of performing the control command.

Thereafter, the processor 66 of the first AI server 10-1 receives the first state information of the home appliance, including a result of performing the operation according to the control command, from the IoT server 20 through the communication unit 61 (S713).

The first state information of the home appliance can include information indicating that the operating state of the home appliance is changed according to the control command.

The first state information of the home appliance can include information indicating a result of performing the basic function of the home appliance.

For example, when the control command is a command for turning on the power of the home appliance, the first state information can include information indicating that the power of the home appliance is turned on.

The processor 66 of the first AI server 10-1 transmits the first state information of the home appliance, which is received from the IoT server 20, to the display device 100 through the communication unit 61 (S715).

The control unit 170 of the display device 100 outputs the first state information of the home appliance received from the first AI server 10-1 (S717).

In an embodiment, the control unit 170 can display the first state information of the home appliance through the display unit 180.

As another example, the control unit 170 can output the first state information of the home appliance through the audio output unit 185.

The user can intuitively determine whether the home appliance is properly controlled through the output of the first state information.

On the other hand, when the operation request type of the home appliance is not the direct operation request, the processor 66 of the first AI server 10-1 determines the operation request type of the home appliance as a custom operation request, and transmits text data corresponding to the voice command to the second AI server 10-2 (S719).

When the operation request type of the home appliance is not the direct operation request, the processor 66 of the first AI server 10-1 can determine the operation request type of the home appliance as a custom operation request for performing the specialized function of the home appliance.

When the analyzed intention is not included in the intentions stored in the memory 63, the processor 66 of the first AI server 10-1 can determine the operation request type of the home appliance as the custom operation request type.

The processor 66 of the second AI server 10-2 obtains the custom operation corresponding to the intention of the voice command by using the text data (S721).

The processor 66 of the second AI server 10-2 can identify the intention of the text data received from the first AI server 10-1, and can determine whether the identified intention is stored in the database 30 or the memory 63.

The database 30 or the memory 63 can store information about one or more home appliances connected to the IoT server 20.

The information of the home appliance can include the basic function of the home appliance, the specialized function of the home appliance, and identification information of the home appliance.

In particular, the database 30 can store intentions corresponding to the specialized function of the home appliance.

This will be described with reference to the following drawings.

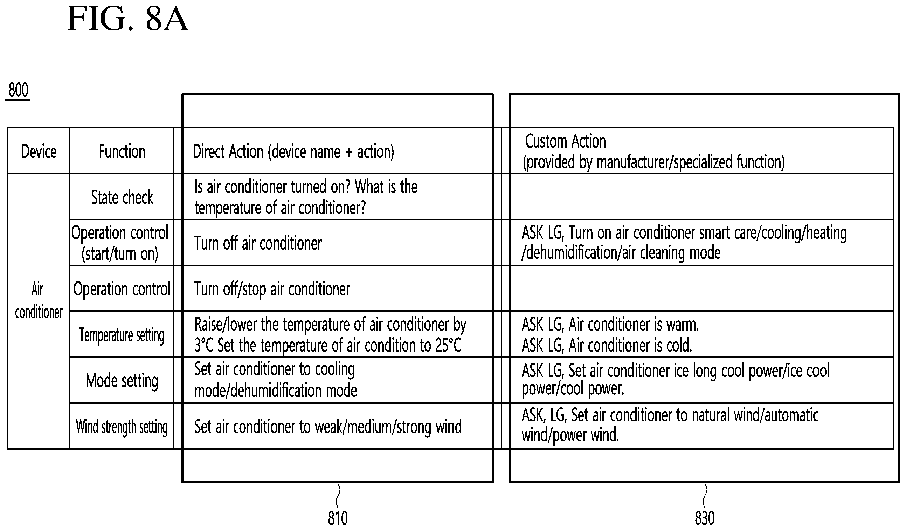

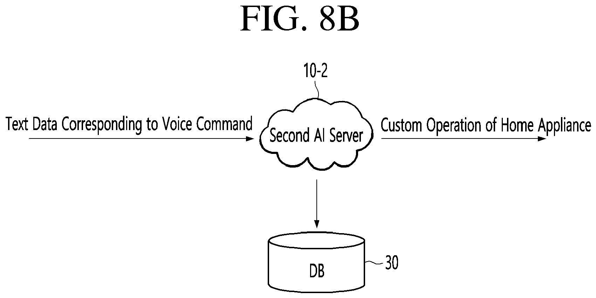

Fig. 8a is a view for describing an example of direct actions and custom actions for functions of an air conditioner, which is one of home appliances, and Fig. 8b is a view for describing a process in which a first AI server determines an operation request type of the home appliance corresponding to a user's intention by using the database 30.

First, referring to Fig. 8a, an action table 800 for controlling the function (or operation) of the air conditioner 55 is illustrated.

The action table 800 can include a direct action group 810 including direct actions for controlling the basic operation for each function of the air conditioner 55, and a custom action group 830 including custom actions for controlling the specialized operation for each function.

The direct actions can correspond to voice commands uttered by a user so as to control the basic function of the air conditioner 55.

The direct action can include a combination of the name of the home appliance and the operation command of the home appliance.

Each of the direct actions can be an action that the first AI server 10-1 can recognize.

The direct actions can be actions stored in the memory 63 or the database 30 of the first AI server 10-1.

In relation to the operation control function of the air conditioner 55, the action <Turn on the air conditioner can be an action indicating the basic function of the air conditioner 55 that the first AI server 10-1 has known in advance.

When the intention of <Turn on the air conditioner uttered by the user is to turn on the power of the air conditioner 55, this matches the intention of the direct action, and thus the first AI server 10-1 can determine the operation type of the home appliance as the direct operation request.

The custom actions can correspond to voice commands uttered by the user for controlling the specialize function of the air conditioner 55.

The custom action can be composed of a combination of a command (ASK) indicating the request to the home appliance, a manufacturer name of the home appliance, a name of the home appliance, and an operation command indicating the specialized operation of the home appliance.

The custom actions can be actions that cannot be recognized by the first AI server 10-1, but can be recognized by only the second AI server 10-2.

The custom actions can be actions stored in the database 30.

In relation to the operation control function of the air conditioner 55, the action <Turn on the air conditioner dehumidification mode> can indicate the specialized function that cannot be recognized by the first AI server 10-1, but can be recognized by only the second server 10-2.

When the intention of <Turn on the air conditioner dehumidification mode> uttered by the user is to operate the operation mode of the air conditioner 55 as the dehumidification mode, this matches the intention of the custom action, and thus the second AI server 10-2 can determine the operation type of the home appliance as the custom operation type.

Referring to Fig. 8b, when the operation request type of the home appliance is determined as the custom operation request, the second AI server 10-2 can receive text data corresponding to the voice command from the first AI server 10-1.

The second AI server 10-2 can determine whether the intention of the received text data matches the intention indicating the operation control of the specialized function of the home appliance stored in the database 30.

When the intention of the text data matches the intention indicating the operation control of the specialized function of the home appliance stored in the database 30, the second AI server 10-2 can obtain the custom operation for controlling the specialized function of the home appliance.

Fig. 7 is described again.

The processor 66 of the second AI server 10-2 converts the text data corresponding to the voice command into a custom operation command indicating the custom operation (S723).

The processor 66 of the second AI server 10-2 can convert the text data of the voice command uttered by the user into the custom operation command based on data stored in the database 30.

For example, the intention of the text data of <Turn on the air conditioner dehumidification mode> is a dehumidification function, which is the specialized function of the air conditioner 55. The second AI server 10-2 can extract the custom action corresponding to the dehumidification function of the air conditioner 55 from the custom action group 830.

The extracted custom action can be <ASK LG, turn on the air conditioner dehumidification mode>.

The processor 66 of the second AI server 10-2 can change the text data of <Turn on the air conditioner dehumidification mode> into the custom operation command of <ASK LG, turn on the air conditioner dehumidification mode>.

The processor 66 of the second AI server 10-2 transmits the converted custom operation command to the IoT server 20 through the communication unit 66 (S725).

The IoT server 20 can transmit the received custom operation command to the corresponding home appliance.

The home appliance can perform the specialized function according to the custom operation command received from the IoT server 20.

When <ASK LG, turn on the air conditioner dehumidification mode> is the custom operation command, the air conditioner 55 can set the operation mode to the dehumidification mode according to the custom operation command.

After setting the operation mode to the dehumidification mode, the air conditioner 55 can transmit, to the IoT server 20 state information including a result of performing the operation.

The air conditioner 55 can directly output the changed state information through a speaker or a display.

The processor 66 of the first AI server 10-1 receives, from the IoT server 20, second state information including a result of performing the operation of the home appliance according to the custom operation command through the communication unit 61 (S727).

The second state information of the home appliance can include information indicating a result of performing the specialized function of the home appliance.

For example, when the home appliance is the air conditioner 55, the second state information can include information indicating that the operation mode of the air conditioner 55 is set to the dehumidification mode.

The control unit 170 of the display device 100 receives the second state information of the home appliance from the first AI server 10-1 (S729), and outputs the received second state information (S731).

In an embodiment, the control unit 170 can display the second state information of the home appliance through the display unit 180.

As another example, the control unit 170 can output the second state information of the home appliance through the audio output unit 185.

As described above, according to an embodiment of the present invention, the user can control the basic function and the specialized function of the home appliance by using the voice recognition function of the display device 100.

That is, the user can control the operation of the home appliance through natural speech without uttering the company name of the specific home appliance, thereby providing an improved user experience.

In addition, the user can intuitively and quickly determine whether the specialized function of the home appliance is controlled according to the voice command uttered by the user through the output of the second state information.

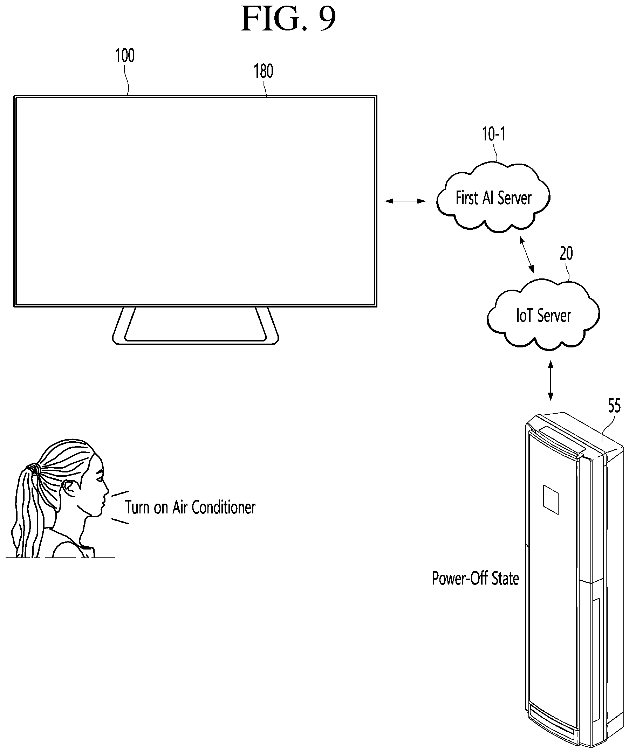

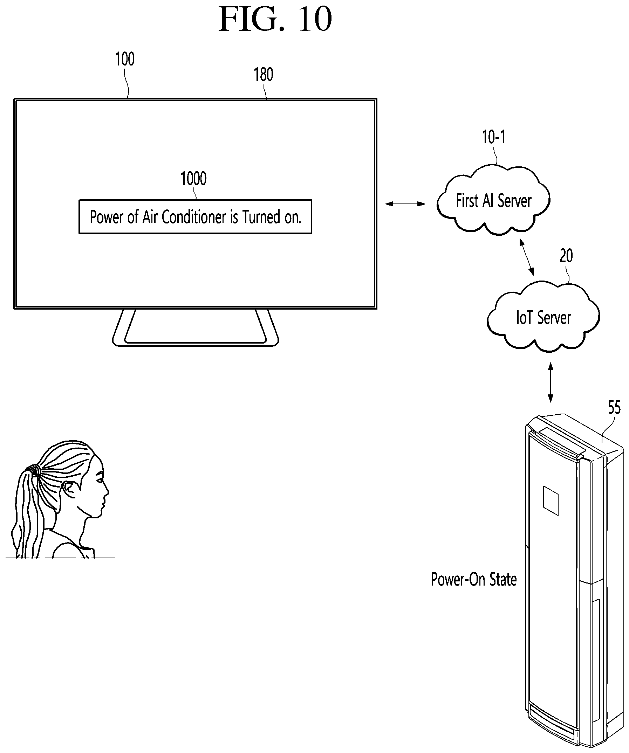

Figs. 9 and 10 are views illustrating a scenario in which the user controls the basic function of the air conditioner through the voice command.

In Fig. 9, it is assumed that the power of the air conditioner 55 is turned off.

Referring to Fig. 9, the display device 100 can receive a voice command of <Turn on the air conditioner> uttered by the user.

The display device 100 can transmit the received voice command to the first AI server 10-1.

The first AI server 10-1 can convert the received voice command into text data and obtain the intention of the converted text data.

When the intention of the text data is to turn on the power of the air conditioner 55, the first AI server 10-1 can determine the operation request type of the air conditioner 55 as the direct request type.

As the operation request type is determined as the direct request type, the first AI server 10-1 can transmit a control command for turning on the power of the air conditioner 55 to the IoT server 20.

Referring to Fig. 10, the air conditioner 55 can switch a power state to an on state according to the control command received from the IoT server 20, and can transmit state information indicating the power-on state to the IoT server 20.

The first AI server 10-1 can receive state information of the air conditioner 55 from the IoT server 20, and can transmit the received state information to the display device 100.

The display device 100 can display a notification 1000 indicating the received power-on state of the air conditioner 55 through the display unit 180.

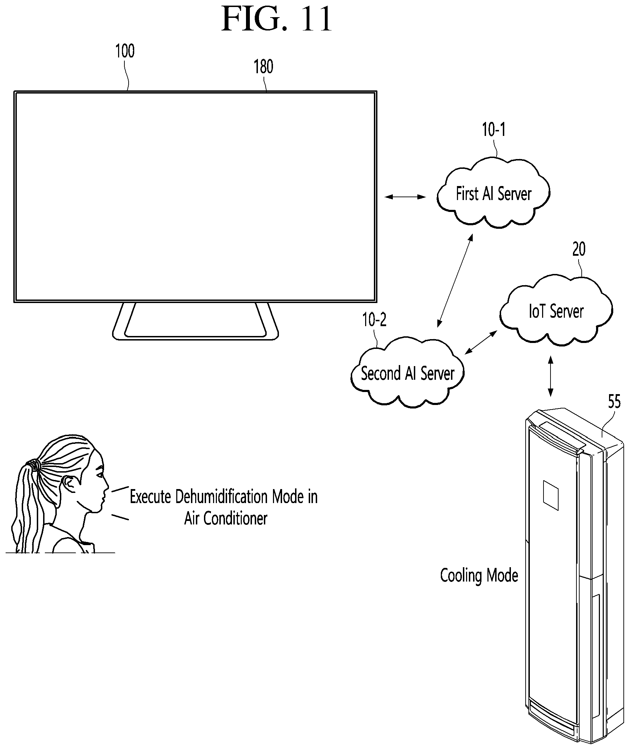

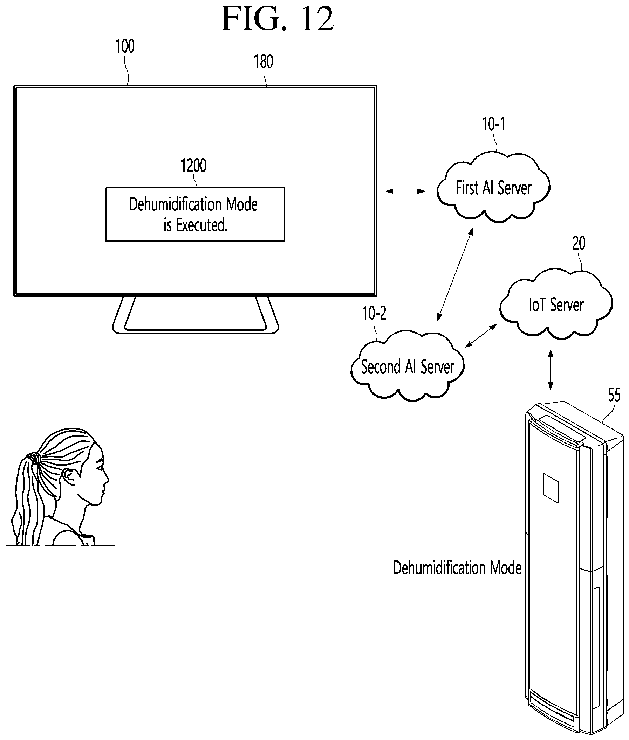

Figs. 11 and 12 are views illustrating a scenario in which the user controls the specialized function of the air conditioner through the voice command.

In Fig. 11, it is assumed that the air conditioner 55 is operating in a cooling mode.

Referring to Fig. 11, the display device 100 can utter a voice command uttered by the user, <Execute the air conditioner in the dehumidification mode>.

The display device 100 can transmit the received voice command to the first AI server 10-1.

The first AI server 10-1 can convert the received voice command into text data and obtain the intention of the converted text data.

When it is determined that the intention of the text data is not the intention to control the basic function of the air conditioner 55, the first AI server 10-1 can determine the operation request type of the air conditioner 55 as the custom operation request.

As the operation request type is determined as the custom operation request, the first AI server 10-1 can transmit the text data to the second AI server 10-2.

The second AI server 10-2 can obtain the custom operation indicating the specialized function of the air conditioner 55 corresponding to the intention of the text data by using the data stored in the database 30. The specialized function of the air conditioner 55 can be the dehumidification mode setting of the air conditioner 55.

The second AI server 10-1 can transmit, to the IoT server 20, the custom operation command indicating the custom operation. The custom operation command can be a command for setting the operation mode of the air conditioner 55 to the dehumidification mode.

Referring to Fig. 12, the IoT server 20 can transmit the custom operation command to the IoT server 20. The IoT server 20 can transmit the custom operation command to the air conditioner 55.

The air conditioner 55 can switch the operation mode from the cooling mode to the dehumidification mode according to the custom operation command received from the IoT server 20.

After switching the operation mode to the dehumidification mode, the air conditioner 55 can transmit state information indicating the switching to the IoT server 20.

The IoT server 20 can transmit the state information received from the air conditioner 55 to the first AI server 10-1, and the first AI server 10-1 can transmit the received state information to the display device 100.

The display device 100 can display a notification 1200 indicating that the dehumidification mode of the air conditioner 55 has been executed through the display unit 180 based on the received state information.

As such, the user can easily control the operation of the home appliance by using only a natural voice command indicating the name and the specific operation of the home appliance without uttering the manufacturer name of the home appliance.

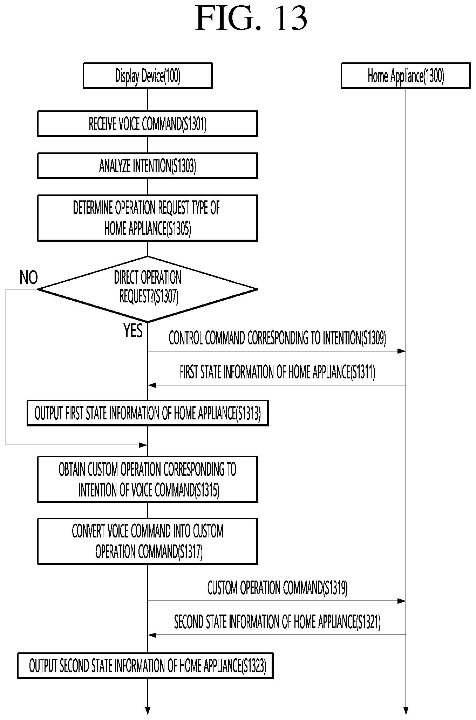

Next, Fig. 13 is a flowchart illustrating a method of operating a display device for controlling home appliance through a voice according to an embodiment of the present invention.

Referring to Fig. 13, the control unit 170 of the display device 100 receives a voice command uttered by a user (S1301).

In an embodiment, the control unit 170 can receive a voice command uttered by a user through a microphone provided in the user input interface unit 150.

In another example, the control unit 170 can receive, from the remote control device 200, a voice command input into the microphone of the remote control device 200.

The control unit 170 of the display device 100 analyzes the intention of the received voice command (S1303), and determines the operation request type of the home appliance based on the analyzed intention (1305).

The control unit 170 can convert voice data corresponding to the voice command into text data by using the STT engine. The control unit 170 can determine the intention of the converted text data by using a natural language processing engine.

The control unit 170 can determine the operation request type of the home appliance based on the identified intention of the text data.

The control unit 170 of the display device 100 determines whether the operation request type of the home appliance is a direct operation request (S1307).

When the intention of the text data is to control the basic function of home appliance, the control unit 170 can determine the operation request type as the direct operation request.

When the intention of the text data matches the direct action corresponding to the basic function control of the home appliance in the action table 800 stored in the storage unit 140, the control unit 170 can determine the operation request type as the direct operation request.

When the intention of the text data matches the direct action corresponding to the specialized function control of the home appliance in the action table 800 stored in the storage unit 140, the control unit 170 can determine the operation request type as the custom operation request.

When it is determined that the operation request type of the home appliance is the direct operation request, the control unit 170 of the display device 100 transmits a control command corresponding to the intention of the voice command to the home appliance 1300 through the wireless communication unit 173 (S1309).

The control unit 170 of the display device 100 receives, from the home appliance 1300, first state information of the home appliance 1300 including a result of performing the operation according to the control command through the wireless communication unit 173 (S1311).

The first state information of the home appliance 1300 can include information indicating a result of performing the basic function of the home appliance 1300.

The control unit 170 of the display device 100 outputs the received first state information (S1313).

The control unit 170 can output the first state information through the display unit 180 or the audio output unit 185.

On the other hand, when it is determined that the operation request type of the home appliance is not the direct operation request, the control unit 170 of the display device 100 determines the operation request type of the home appliance as the custom operation request, and obtains the custom operation corresponding to the intention of the voice command (S1315).

When the intention of the voice command matches the custom action of the action table 800 stored in the storage 140, the control unit 170 can determine the operation request type as the custom operation request.

The control unit 170 can obtain the custom operation corresponding to the custom action.

The control unit 170 of the display device 100 converts the voice command into the custom operation command indicating the custom operation (S1317), and transmits the custom operation command to the home appliance 1300 (S1319).

The control unit 170 can convert the voice command or the intention of the voice command into the custom operation command, and transmit the custom operation command to the home appliance 1300 through the wireless communication unit 173.

The control unit 170 of the display device 100 receives, from the home appliance 1300, the second state information of the home appliance 1300 including a result of performing the operation according to the custom operation command through the wireless communication unit 173 (S1321).

The control unit 170 of the display device 100 outputs the received second state information (S1323).

The control unit 170 can output the second state information through the display unit 180 or the audio output unit 185.

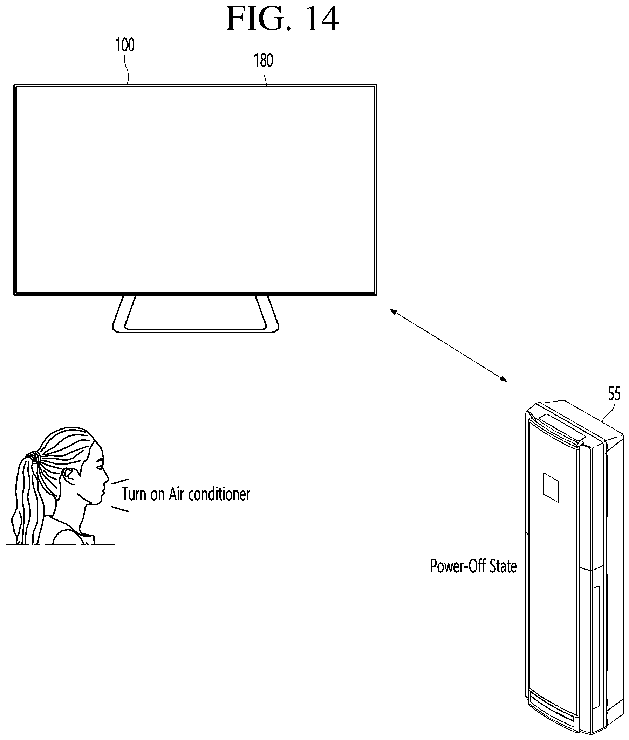

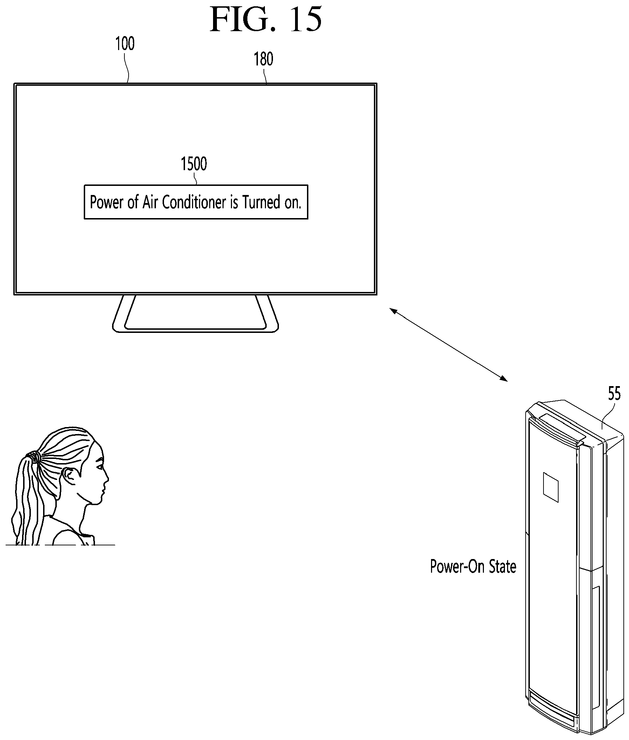

Figs. 14 and 15 are views for describing a scenario in which the display device controls the basic function of the air conditioner through a user's voice command.

In Fig. 14, it is assumed that the power of the air conditioner 55 is in a turned-off state.

The display device 100 can receive a voice command of <Turn on the air conditioner> uttered by the user.

The display device 100 can identify the intention of the received voice command, and can determine whether the operation request type of the home appliance is a direct operation request based on the identified intention.

Since the intention of the voice command is to turn on the power of the air conditioner 55, the display device 100, this corresponds to the basic function of the air conditioner 55, and thus the display device 100 can determine the operation request type as the direct operation request.

The display device 100 can transmit a control command for turning on the power of the air conditioner 55 to the air conditioner 55. The air conditioner 55 can turn on its own power according to the received control command, and can transmit state information indicating the power-on state to the display device 100.

Referring to Fig. 15, the display device 100 can receive the state information indicating the power-on state received from the air conditioner 55, and can display a notification 1500 including the received state information on the display unit 180.

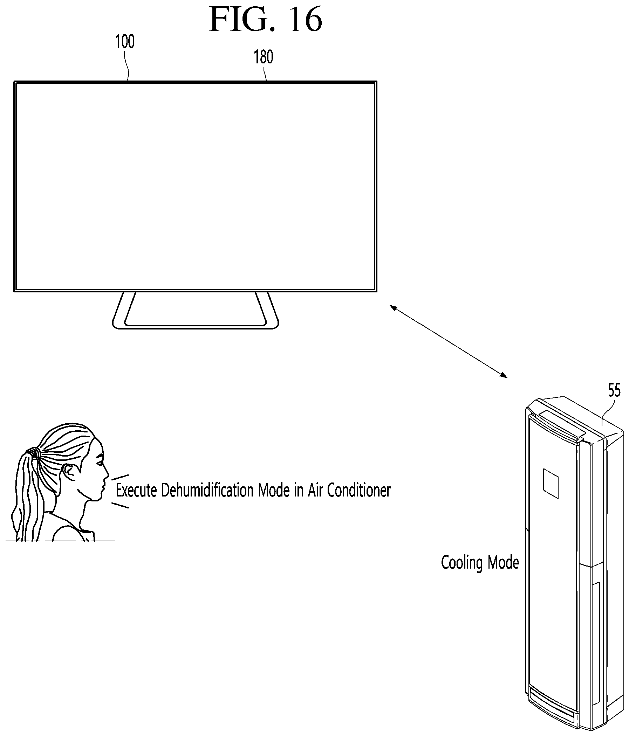

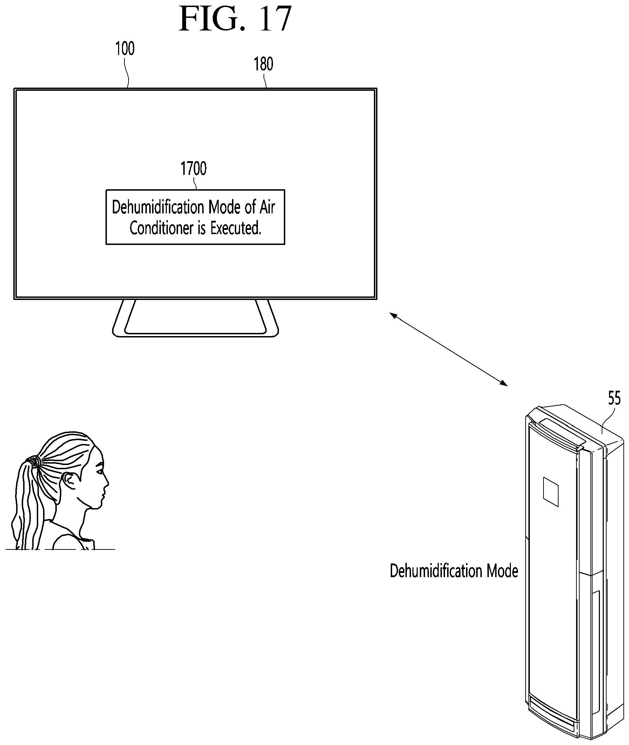

Figs. 16 and 17 are views for describing a scenario in which the display device controls the specialized function of the air conditioner through a user's voice command.

In Fig. 16, it is assumed that the air conditioner 55 is operating in a cooling mode.

The display device 100 can receive a voice command uttered by the user, <Execute the air conditioner in the dehumidification mode>.

The display device 100 can identify the intention of the received voice command, and can determine whether the operation request type of the home appliance is a direct operation request based on the identified intention.

The display device 100 can determine the operation request type corresponding to the intention of the voice command by using the action table 800 stored in the storage unit 140. That is, the storage unit 140 can store the action table 800.

When the operation of the air conditioner 55 corresponding to the identified intention is an operation corresponding to the basic function, the display device 100 can determine the operation request type as a direct operation request.

When the operation corresponds to a specialized function that is an operation of the air conditioner 55 corresponding to the identified intention, the display device 100 can determine the operation request type as a custom operation request.

The display device 100 identifies the intention of the voice command as an intention to set the operation mode of the air conditioner 55 to the dehumidification mode, and the dehumidification mode is an operation corresponding to the specialized function of the air conditioner 55, and thus the display device 100 can determine the operation request type as a custom operation request.

The display 100 can convert the voice command of <Execute the dehumidification mode in the air conditioner into a custom operation command of <ASK LG, turn on the air conditioner dehumidification mode> through the action table 800.

Referring to Fig. 17, the display device 100 can transmit the custom operation command to the air conditioner 55. The air conditioner 55 can changed the operation mode from the cooling mode to the dehumidification mode according to the custom operation command.

After switching the operation mode to the dehumidification mode, the air conditioner 55 can transmit state information indicating the switching to the display device 100.

The display device 100 can display a notification 1700 indicating that the dehumidification mode of the air conditioner 55 has been executed on the display unit 180 based on the received state information.

As such, according to an embodiment of the present invention, the user can easily control the operation of the home appliance through natural speech without uttering the company name of the home appliance.

According to an embodiment of the present invention, the above-described method can be implemented with codes readable by a processor on a medium in which a program is recorded. Examples of the medium readable by the processor include a ROM, a RAM, a CD-ROM, a magnetic tape, a floppy disk, an optical data storage device, and the like, and can include those implemented in the form of carrier wave (for example, transmission over Internet).

The display device described above is not limitedly applicable to the configuration and method of the above-described embodiments, and the embodiments are configured by selectively combining all or part of each of the embodiments such that various modifications can be made.

## Claims

1. A display device for controlling a home appliance by using voice recognition, the display device comprising:
a wireless communication unit configured to wirelessly communicate with the home appliance; and
a control unit configured to receive a voice command, to obtain intention of the received voice command, to determine whether the obtained intention is a custom operation request for controlling a function specialized for the home appliance, to convert the voice command into a custom operation command for performing the specialized function when the intention is the custom operation request, and to transmit the converted custom operation command to the home appliance through the wireless communication unit.

2. The display device of claim 1, wherein the control unit is configured to receive state information indicating a result of executing the custom operation command from the home appliance through the wireless communication unit, and to output the received state information.

3. The display device of claim 2, further comprising a display unit or an audio output unit,
wherein the control unit is configured to display the received state information on the display unit or output the received state information as a voice through the audio output unit.

4. The display device of claim 1, wherein the custom operation command includes an operation command indicating a manufacturer name of the home appliance, a name of the home appliance, and the specialized function of the home appliance.

5. The display device of claim 1, further comprising a storage unit including custom actions indicating the function specialized for the home appliance,
wherein, when the obtained intention matches one of the custom actions, the control unit is configured to determine that the intention is the custom operation request.

6. The display device of claim 5, wherein the storage unit further includes direct actions indicating a basic function of the home appliance, and
wherein, when the obtained intention matches one of the direct actions, the control unit is configured to determine the intention as a direct operation request for controlling the basic function of the home appliance.

7. The display device of claim 6, wherein, when the control unit determines that the intention is the direct operation request for controlling the basic function of the home appliance, the control unit is configured to transmit a control command corresponding to the intention to the home appliance.

8. An artificial intelligence server for controlling a home appliance by using voice recognition, the artificial intelligence server comprising:
a communication unit configured to receive a voice command from a display device; and
a processor configured to obtain intention of the received voice command, to determine whether the obtained intention is a custom operation request for controlling a function specialized for the home appliance, to convert the voice command into a custom operation command for performing the specialized function when the intention is the custom operation request, and to transmit the converted custom operation command through the communication unit to an external server for controlling the operation of the home appliance.

9. The artificial intelligence server of claim 8, wherein the processor is configured to receive state information indicating a result of executing the custom operation command from the external server through the communication unit, and to transmit the received state information to the display device.

10. The artificial intelligence server of claim 8, wherein the custom operation command includes an operation command indicating a manufacturer name of the home appliance, a name of the home appliance, and the specialized function of the home appliance.

11. The artificial intelligence server of claim 8, further comprising a storage unit including custom actions indicating the function specialized for the home appliance,
wherein, when the obtained intention matches one of the custom actions, the processor is configured to determine that the intention is the custom operation request.

12. An operating method of a display device for controlling a home appliance by using voice recognition, the operating method comprising:
receiving a voice command;
obtaining intention of the received voice command;
determining whether the obtained intention is a custom operation request for controlling a function specialized for the home appliance;
when the intention is the custom operation request, converting the voice command into a custom operation command for performing the specialized function; and
transmitting the converted custom operation command to the home appliance.

13. The operating method of claim 12, further comprising:
receiving, from the home appliance, state information indicating a result of executing the custom operation command; and
outputting the received state information.

14. The operating method of claim 12, wherein the custom operation command includes an operation command indicating a manufacturer name of the home appliance, a name of the home appliance, and the specialized function of the home appliance.
